# EUROPÄISCHE PATENTANMELDUNG

(11) **EP 4 578 963 A2**
(43) Veröffentlichungstag der Anmeldung: **02.07.2025**
(21) Anmeldenummer: 25168439.5
(22) Anmeldetag: 06.12.2022
(51) Int. Cl.: C21D 1/20

(54) **VERFAHREN ZUR HERSTELLUNG VON HOCHZÄHEN WÄLZLAGERKOMPONENTEN**

(30) Priorität: 03.03.2022 DE 102022104982; 02.12.2022 DE 102022131948
(62) Teilanmeldung aus: 22826337.2
(71) Anmelder: Schaeffler Technologies AG & Co. KG, 91074 Herzogenaurach (DE)
(72) Erfinder: Dinkel, Markus, 97074 Würzburg (DE); Blaß, Toni, 97493 Garstadt (DE); Trojahn, Werner, 97464 Niederwerrn (DE); Bierlein, Andreas, 97437 Haßfurt (DE)

(57) **Zusammenfassung**

Die Erfindung betrifft ein Verfahren zur Herstellung von hochzähen Wälzlagerkomponenten aufweisend die Schritte:
Bereitstellen wenigstens einer Wälzlagerkomponente aus einem Stahlwerkstoff, wobei der Stahlwerkstoff einen Reinheitsgrad aufweist derart, dass bei einer mikroskopischen Prüfung von Edelstählen auf nichtmetallische Einschlüsse nach DIN 50602 (Ausgabe 1998) im Mittel weniger als 100 nichtmetallische Einschlüsse pro 1000 mm² Schlifffläche auftreten, und wobei der Stahlwerkstoff 0,70 - 1,1 Gew.-% Kohlenstoff sowie eine Mischung an Legierungselementen von mehr als 1,75 Gew.-% und weniger als 3,4 Gew.-% umfasst, wobei die Mischung an Legierungselementen Mangan, Chrom und Silizium umfasst. Weiterhin erfolgt in einer ersten Verfahrensvariante ein Austenitisieren, Abschrecken, Abkühlen, Anlassen und abschließendes Abkühlen auf Raumtemperatur, wobei in einer erhaltenen martensitischen Matrix Restaustenit-Gehalte zwischen 15 Vol.-% und 25 Vol.-% erzeugt werden. Alternativ erfolgt in einer zweiten Verfahrensvariante ein Austenitisieren, Abschrecken, Erwärmen und Abkühlen auf Raumtemperatur, wobei in einer erhaltenen bainitischen Matrix Restaustenit-Gehalte zwischen 2 Vol.-% und 18 Vol.-% erzeugt werden.

## Beschreibung

Die Erfindung betrifft ein Verfahren zur Herstellung von hochzähen Wälzlagerkomponenten, insbesondere für die Herstellung von Wälzkörpern oder Wälzlagerringen.

Beispielsweise auf dem Gebiet der Wälzlager, wie Kugellager oder Pendelrollenlager, steigen die Anforderungen im Hinblick auf Wälzfestigkeit und Performance stetig. Speziell im Hinblick auf Ermüdungslebensdauer und auch auf Toleranz gegen Verschmutzungen sowie auch im Hinblick auf widrige Betriebsbedingungen ist eine Leistungssteigerung relevant.

Dabei werden Wälzlager beziehungsweise Wälzlagerkomponenten, wie Wälzkörper und Wälzlagerringe, insbesondere Innenlagerringe oder Außenlagerringe, nach heutigem Stand der Technik vornehmlich aus übereutektoiden Wälzlagerstählen gemäß DIN EN ISO 683-17 (Ausgabe 2015) hergestellt. Diese werden entweder martensitisch oder bainitisch auf eine Härte von mehr als 58 HRC gehärtet.

Des Weiteren ist es bekannt, dass bei gleichbleibender äußerer Last, insbesondere bei Pendelrollenlagern, höhere Belastungen im Betrieb auftreten als dies bei Kugellagern der Fall ist. Dies liegt unter anderem daran, dass Pendelrollenlager im Vergleich zu Kugellagern am Kontakt zwischen Wälzkörper und Lagerring einen erhöhten Schlupfanteil aufweisen, wodurch Pendelrollenlager anfälliger für oberflächeninduzierte Schädigung oder für grübchenartige Ausbrüche und für Ermüdungsschäden sind.

Die oberflächeninduzierte Schädigung beziehungsweise die grübchenartigen Ausbrüche begrenzen die Tragfähigkeit sowie die Standzeit, also die Lebensdauer eines Wälzlagers und seiner Wälzlagerkomponenten. Dabei gilt, je höher die Wälzpressung desto eher treten grübchenartige Ausbrüche auf und desto geringer ist die sogenannte Grübchentragfähigkeit. In diesem Zusammenhang ist über Laufversuche von Wälzlagern die ertragbare Wälzpressung in Abhängigkeit von der Lebensdauer, das heißt von der Anzahl der Überrollungen bis zur Grübchenbildung (sogenanntes "pitting") bekannt. Diesen Zusammenhang für bestimmte Werkstoffe beschreiben Wöhlerlinien der Grübchentragfähigkeit.

Des Weiteren ist bekannt, dass verschmutzte Schmierstoffe sowie die Schmierfilmdicke und die Oberflächenbeschaffenheit der Wälzlagerkomponenten die Lebensdauer eines Wälzlagers herabsetzen können, sodass schneller mit grübchenartigen Ausbrüchen zu rechnen ist. Denn Verschmutzungen, Oberflächenbeschaffenheit und Schmierungszustand beeinträchtigen den Kontakt zwischen Wälzkörper und Wälzlagerring. So kann ein in die Laufbahn eingedrückter Partikel zu einer veränderten Kontaktfläche zwischen Wälzkörper und Wälzlagerring und somit zu einer erhöhten Flächenpressung führen. Dadurch kann die Oberfläche der Wälzlagerrings einen grübchenartigen Ausbruch erfahren, wodurch das Wälzlager eine geringere Lebensdauer hat.

In diesem Zusammenhang ist es bekannt, Wälzlager aus Werkstoffen mit hoher Zähigkeit, wie Wälzlagerstähle beziehungsweise Wälzlagerstahl-Legierungen gemäß DIN EN ISO 683-17 (Ausgabe 2015), auszubilden, die zu einer geringen Ausbildung von grübchenartigen Ausbrüchen neigen und somit eine im Vergleich zu Wälzlagern aus anderen Werkstoffen höhere Lebensdauer aufweisen. Aber auch damit treten noch vorzeitige Ausfälle auf.

Daher ist es Aufgabe der vorliegenden Erfindung, ein Verfahren zur Herstellung von hochzähen Wälzlagerkomponenten anzugeben, welches die Tragfähigkeit, die Standzeit und damit die Lebensdauer einer Wälzlagerkomponente sowie eines Wälzlagers erhöht, sodass grübchenartige Ausbrüche vermieden werden können und die Grübchentragfähigkeit und die Lebensdauer einer Wälzlagerkomponente oder eines damit gebildeten Wälzlagers gesteigert werden kann. Ferner ist es Aufgabe der vorliegenden Erfindung, eine Verwendung des Verfahrens zur Herstellung von hochzähen Wälzlagerkomponenten eines Wälzlagers anzugeben.

Diese Aufgaben werden erfindungsgemäß durch die Merkmale der unabhängigen Patentansprüche gelöst. Weitere vorteilhafte Weiterbildungen sind Gegenstand der Unteransprüche.

Ein erster Aspekt der vorliegenden Erfindung umfasst ein Verfahren zur Herstellung von hochzähen Wälzlagerkomponenten. Denn hochzähe Wälzlagerkomponenten neigen zu geringer Ausbildung von grübchenartigen Ausbrüchen, haben also eine hohe Grübchentragfähigkeit, sodass die Lebensdauer einer Wälzlagerkomponente, hier vorzugsweise eines Wälzlagers, insbesondere eines Pendelrollenlagers, gesteigert werden kann.

Dabei umfasst das Verfahren als ersten Schritt ein Bereitstellen wenigstens einer Wälzlagerkomponente aus einem Stahlwerkstoff, wobei der Stahlwerkstoff einen Reinheitsgrad aufweist derart, dass bei einer mikroskopischen Prüfung von Edelstählen auf nichtmetallische Einschlüsse nach DIN 50602 (Ausgabe 1998) im Mittel weniger als 100 nichtmetallische Einschlüsse pro 1000 mm² Schlifffläche auftreten, und wobei der Stahlwerkstoff 0,70 - 1,1 Gew.-% Kohlenstoff sowie eine Mischung an Legierungselementen von mehr als 1,75 Gew.-% und weniger als 3,4 Gew.-% umfasst, wobei die Mischung an Legierungselementen Mangan, Chrom und Silizium umfasst.

Der darauffolgende Schritt umfasst ein Austenitisieren beziehungsweise die Austenitisierung der wenigstens einen Wälzlagerkomponente in einem Temperaturbereich derart, dass im Gefüge des Stahlwerkstoffs Austenit und Karbide nebeneinander vorliegen. Das Austenitisieren kann oberhalb der sogenannten Austenitisierungstemperatur Ac1 des Stahlwerkstoffs der wenigstens einen Wälzlagerkomponente durchgeführt werden. Zudem kann das Austenitisieren in einem Temperaturbereich von 835 °C bis 870 °C oder in einem Temperaturbereich von 845 °C bis 860 °C stattfinden.

Im Anschluss daran schließt sich als Verfahrensschritt ein gezieltes Abschrecken (sogenanntes "Quenching") der wenigstens einen Wälzlagerkomponente an, sodass nicht umgewandelter Restaustenit erhalten bleibt. Beim Abschrecken wird auf eine Temperatur, die 10 bis 20 Kelvin unterhalb einer Martensitstarttemperatur des verwendeten Stahlwerkstoffs liegt, gekühlt, indem die Wälzlagerkomponente in ein Warmbad mit einer Temperatur im Bereich von 170 bis 220 °C umgelagert wird und dort 14 bis 25 min gehalten wird, wodurch Martensit gebildet und nicht umgewandelter Restaustenit erhalten bleibt, und wobei Kohlenstoff aus dem gebildeten Martensit in den nicht umgewandelten Restaustenit wandert.

Das Warmbad ist insbesondere ein Salzwarmbad. Das Warmbad weist bevorzugt eine Temperatur im Bereich von 190 °C bis 210 °C auf. In der Haltestufe bei einer Temperatur im Bereich von 170 °C bis 220 °C, beispielsweise bei einer Temperatur im Bereich von 190 °C bis 210 °C, wird Martensit gebildet. Dabei wird in der genannten Haltestufe der Kohlenstoff aus dem neu gebildeten Martensit ausgeschieden und der Kohlenstoff kann teilweise in einen noch vorliegenden Restaustenit wandern. Dieser wird hierdurch weiter gegen eine Umwandlung stabilisiert, da die Übersättigung ansteigt und damit die Martensitstarttemperatur dieses Restaustenits deutlich absinkt. Der Kohlenstoff aus den ersten gebildeten Martensitnadeln wandert in den noch vorliegenden Restaustenit. Eine Reduktion des Kohlenstoffanteils hat einen positiven Effekt auf die Zähigkeit des Martensits. Eine weitere Reduktion des Matrixkohlenstoffs kann nicht vor dem Abschreckvorgang, beispielsweise durch eine gezielte Unteraustenitisierung des Materials, erzielt werden, da sonst keine ausreichende Durchhärtung der Werkstücke erzielt werden kann.

Bevorzugt ist hier weiterhin ein Stahlwerkstoff mit einem Kohlenstoffgehalt von 0,70 bis 1,05 Gew.-%, insbesondere von 0,80 bis 1,05 Gew.-%, weiterhin bevorzugt von 0,89 bis 1,05 Gew.-%, sowie einer Mischung an Legierungselementen von mehr als 1,75 Gew.-% und weniger als 3,4 Gew.-%, wobei die Mischung an Legierungselementen Mangan, Chrom und Silizium umfasst.

Alle genannten Temperaturen und/oder Zeitangaben sind abhängig von der Wälzlagerkomponenten- und Chargengröße und der Anzahl an Wälzlagerkomponenten sowie von dem Chargenaufbau. Ein Durchschnittsfachmann kann diese aber entsprechend anpassen.

Im Anschluss an das Abschrecken sind für den weiteren Verfahrensverlauf zwei Alternativen denkbar.

### Alternative 1 gemäß Anspruch 1:

So schließt sich in einer ersten Alternative der vorliegenden Erfindung nach dem Abschrecken ein Schritt des Abkühlens der wenigstens einen Wälzlagerkomponente auf Raumtemperatur an.

Nach dem Abkühlen erfolgt der Schritt des Anlassens (sogenanntes "Partitioning") der wenigstens einen Wälzlagerkomponente, um ein Werkstoffgefüge mit einer martensitischen Matrix, eventuell mit Anteilen an Bainit, und mit einem bestimmten Restaustenit-Gehalt zu erhalten. Das Anlassen erfolgt, indem die Wälzlagerkomponente auf eine Temperatur im Bereich von 220 bis 245°C erwärmt und auf dieser über einen Zeitraum von 1 bis 4 h gehalten wird. Eine Umverteilung des Kohlenstoffs im Zuge des Anlassens senkt den resultierenden Kohlenstoff in der Martensitmatrix weiterhin ab, wodurch die Zähigkeit wiederum gesteigert wird.

Der Stahlwerkstoff der wenigstens einen Wälzlagerkomponente zeichnet sich durch eine martensitische Matrix, optional mit Anteilen an Bainit, und einen Restaustenit-Gehalt im Bereich von 15 Vol.-% bis 25 Vol.-% aus.

Erhöhte Restaustenit-Gehalte erfüllen höhere Anforderungen im Hinblick auf die Toleranz eines Wälzlagers beim Einsatz in verschmutzten Umgebungsbedingungen. Durch die thermische Stabilisierung des Bauteils mithilfe der oben dargestellten Behandlung kann der Restaustenit außergewöhnlich stabil ausgebildet werden und selbst bei erhöhten Anwendungstemperaturen im Bereich von 150 °C bis 180 °C oder bei erhöhten Flächenpressungen nicht mehr - oder nur in geringem Maße - umwandeln. Dieser stabile Restaustenit verleiht einer Wälzlagerkomponente eine erhöhte Zähigkeit in Verbindung mit einem reduzierten Kohlenstoffgehalt in der Martensitmatrix.

Anschließend schließt sich als letzter Schritt der ersten Alternative des Verfahrens ein Abkühlen auf Raumtemperatur an.

Wie bereits erwähnt, sind alle genannten Temperaturen und/oder Zeitangaben abhängig von der Wälzlagerkomponenten- und Chargengröße und der Anzahl an Wälzlagerkomponenten sowie von dem Chargenaufbau. Ein Durchschnittsfachmann kann diese aber entsprechend anpassen.

Wie oben ausgeführt, sind im Anschluss an das Abschrecken für den weiteren Verfahrensverlauf zwei Alternativen denkbar. Während die erste Alternative bereits geschildert wurde, findet sich nachstehend die zweite Alternative.

### Alternative 2 gemäß Anspruch 2:

In einer zweiten Alternative der vorliegenden Erfindung schließt sich nach dem Abschrecken ein Schritt des Erwärmens der wenigstens einen Wälzlagerkomponente auf eine Temperatur oberhalb der Martensitstart-Temperatur des verwendeten Stahlwerkstoffs an. Dazu wird die wenigstens eine Wälzlagerkomponente in ein Warmbad, insbesondere ein Salzwarmbad, mit einer Temperatur im Bereich von 220 bis 240°C umgelagert und dort über einen Zeitraum von 3 bis 24 Stunden gehalten, um ein Werkstoffgefüge mit einer bainitischen Matrix, insbesondere enthaltend Karbide, und mit einem bestimmten Restaustenit-Gehalt zu erhalten. Es wird also Bainit gebildet und nicht umgewandelter Restaustenit bleibt erhalten. Eine Umverteilung des Kohlenstoffs in den Restaustenit im Zuge des Erwärmens senkt den resultierenden Kohlenstoffgehalt in der Bainitmatrix weiterhin ab, wodurch die Zähigkeit wiederum gesteigert wird.

Der Stahlwerkstoff der wenigstens einen Wälzlagerkomponente wird mit einer bainitischen Matrix, insbesondere enthaltend Karbide, und mit einen Restaustenit-Gehalt im Bereich von 2 Vol.-% bis 18 Vol.-% erhalten.

Erhöhte Restaustenitgehalte ein Wälzlagerkomponenten erfüllen höhere Anforderungen im Hinblick auf die Toleranz eines Wälzlagers beim Einsatz in verschmutzten Umgebungsbedingungen. Durch die thermische Stabilisierung des Bauteils mithilfe der oben beschriebenen Behandlung kann der Restaustenit außergewöhnlich stabil ausgebildet werden und selbst bei erhöhten Anwendungstemperaturen im Bereich von 150 °C bis 180 °C oder bei erhöhten Flächenpressungen nicht mehr - oder nur in geringem Maße - umwandeln. Dieser stabile Restaustenit verleiht einer Wälzlagerkomponente eine erhöhte Zähigkeit in Verbindung mit einem reduzierten Kohlenstoffgehalt in der Bainitmatrix.

Die Haltedauer im Warmbad kann abhängig von der Wälzlagerkomponenten- und Chargengröße sowie von dem Chargenaufbau sein. Ein Durchschnittsfachmann kann diese aber entsprechend anpassen.

Nach dem Warmbad wird die wenigstens eine Wälzlagerkomponente ergänzend in einen Niedertemperaturofen oder in ein weiteres Warmbad, wie beispielsweise in ein Salzwarmbad, mit ansteigender oder erhöhter Temperatur im Vergleich zum Warmbad, insbesondere mit einer Temperatur im Bereich von 220 °C bis 280 °C, umgesetzt, bis der bestimmte Restaustenit-Gehalt erreicht ist. Die Haltedauer liegt hierbei im Bereich von 0,5 bis 10 Stunden.

Anschließend schließt sich als letzter Schritt der zweiten Alternative des Verfahrens ein Abkühlen auf Raumtemperatur an.

Alle nachfolgenden Merkmale können sowohl auf die erste Alternative als auch die zweite Alternative des Verfahrens zutreffen und für diese angewendet werden.

So kann der Stahlwerkstoff der wenigstens einen Wälzlagerkomponente 0,7 bis 1,05 Gew.-% Kohlenstoff sowie eine Mischung an Legierungselementen von mehr als 3,05 Gew.-%, umfassen.

Außerdem umfasst der Stahlwerkstoff der wenigstens einen Wälzlagerkomponente bevorzugt folgende Bestandteile:
- 0,7 - 1,05 Gew.-% Kohlenstoff,
- 0,50 - 0,90 Gew.-% oder 0,40 - 0,75 Gew.-% Silizium,
- 0,90 - 1,30 Gew.-% oder 0,80 - 1,70 Gew.-% Mangan,
- 1,3 - 1,75 Gew.-% oder 0,90 - 2,05 Gew.-% Chrom, und
- Rest Eisen sowie nicht vermeidbare Spurenelemente bzw. Verunreinigungen (wie Antimon (Sb), Zinn (Sn), Arsen (As) und dergleichen).

Ferner kann der Stahlwerkstoff der wenigstens einen Wälzlagerkomponente höchstens 0,10 Gew.-% oder höchstens 0,15 Gew.-% oder zwischen 0,50 Gew.-% und 0,6 Gew.-% Molybdän aufweisen.

Die vorgenannten Elemente innerhalb der geschilderten Zusammensetzungen des Stahlwerkstoffs der wenigstens einen Wälzlagerkomponente bewirken in ihrer Kombination eine Steigerung der Zähigkeit der wenigstens einen Wälzlagerkomponente. Dies gilt unter Einsatz des Verfahrens zur Herstellung von hochzähen Wälzlagerkomponenten umso mehr. So haben im Speziellen die Verfahrensschritte der ersten oder zweiten Alternative des Verfahrens in Kombination mit der vorgenannten Zusammensetzung der Elemente für einen Stahlwerkstoff der wenigstens einen Wälzlagerkomponente eine im Vergleich zum Stand der Technik deutliche Erhöhung der Zähigkeit des Stahlwerkstoffs zur Folge. Die Erhöhung der Zähigkeit führt zu einer höheren Grübchentragfähigkeit beziehungsweise zu einer höheren Wälzfestigkeit und somit zu einer Erhöhung der Lebensdauer der wenigstens einen Wälzlagerkomponente.

Vorzugsweise umfasst der Stahlwerkstoff der wenigstens einen Wälzlagerkomponente folgende Bestandteile:
- max. 0,35 Gew.-% Nickel,
- max. 0,10 Gew.-% Vanadium,
- max. 0,060 Gew.-% Aluminium,
- max. 0,08 Gew.-% Schwefel,
- max. 0,025 Gew.-% Phosphor,
- max. 0,003 Gew.-% Titan,
- max. 0,015 Gew.-% Stickstoff,
- max. 0,007 Gew.-% Sauerstoff,
- max. 0,0035 Gew.-% Kalzium,
- max. 0,30 Gew.-% Kupfer.

Das Höchstmaß der vorgenannten Elemente innerhalb der Zusammensetzung des Stahlwerkstoffs der wenigstens einen Wälzlagerkomponente beeinflusst wenig bis gar nicht und in einem so geringen Maße die Materialeigenschaften, dass diese Bestandteile einzeln oder in Summe innerhalb der vorgenannten Grenzen beziehungsweise in der vorgenannten Konzentration hinnehmbar sind.

Des Weiteren kann der Stahlwerkstoff der wenigstens einen Wälzlagerkomponente eine Wälzlagerstahl-Legierung aufweisen.

Die Wälzlagerstahl-Legierung kann aus der DIN EN ISO 683-17 (Ausgabe 2015) oder aus der älteren DIN 17230 (Ausgabe 1980) gewählt sein.

Bevorzugt ist die Wälzlagerstahl-Legierung die Legierung mit der Bezeichnung 100CrMnSi4-4 oder mit der Werkstoffbezeichnung 1.3518.

Als Alternative zum vorgenannten kann die Wälzlagerstahl-Legierung die Legierung mit der Bezeichnung 100CrMnSi6-6 oder mit der Werkstoffbezeichnung 1.3519 sein.

Als weitere Alternative kann die Wälzlagerstahl-Legierung die Legierung mit der Bezeichnung 100CrMnSi6-4 oder mit der Werkstoffbezeichnung 1.3520 sein.

Auch kann alternativ die Wälzlagerstahl-Legierung die Legierung mit der Bezeichnung 100CrMnMoSi8-4-6 oder mit der Werkstoffbezeichnung 1.3539 sein.

Die vorgenannten Wälzlagerstahl-Legierungen bewirken eine Steigerung der Zähigkeit der wenigstens einen Wälzlagerkomponente. Dies gilt unter Einsatz des Verfahrens zur Herstellung von hochzähen Wälzlagerkomponenten umso mehr. So bewirken im Speziellen die Verfahrensschritte der ersten oder zweiten Alternative der vorliegenden Erfindung in Kombination mit den vorgenannten Wälzlagerstahl-Legierungen eine im Vergleich zum Stand der Technik deutliche Erhöhung der Zähigkeit des Stahlwerkstoffs. Die Erhöhung der Zähigkeit führt zu einer höheren Grübchentragfähigkeit beziehungsweise zu einer höheren Wälzfestigkeit und somit zu einer Erhöhung der Lebensdauer der wenigstens einen Wälzlagerkomponente, beispielsweise für die Verwendung der vorgenannten Wälzlagerstahl-Legierungen in Kombination mit den Verfahrensschritten der ersten oder zweiten Alternativen des Verfahrens bei Wälzlagern, insbesondere Pendelrollenlagern.

Außerdem kann eine Wälzlagerstahl-Legierung nach DIN EN ISO 683-17 (Ausgabe 2015) bei einer mikroskopischen Prüfung von Edelstählen auf nichtmetallische Einschlüsse weniger Einschlüsse aufweisen als in der DIN EN ISO 683-17 (Ausgabe 2015) gefordert. Erfindungsgemäß weist der Stahlwerkstoff der wenigstens einen Wälzlagerkomponente im Vergleich zur DIN EN ISO 683-17 (Ausgabe 2015) eine höhere Reinheit auf. Die vorgenannte Wälzlagerstahl-Legierung nach DIN EN ISO 683-17 (Ausgabe 2015) in Kombination mit einer erhöhten Reinheit oder einem erhöhten Reinheitsgrad und in Kombination mit den Verfahrensschritten der ersten oder zweiten Alternative des Verfahrens bewirken eine Steigerung der Zähigkeit der wenigstens einen Wälzlagerkomponente. Die Erhöhung der Zähigkeit führt zu einer höheren Grübchentragfähigkeit beziehungsweise zu einer höheren Wälzfestigkeit und somit zu einer Erhöhung der Lebensdauer der wenigstens einen Wälzlagerkomponente, beispielsweise für die Verwendung der vorgenannten Wälzlagerstahl-Legierung nach DIN EN ISO 683-17 (Ausgabe 2015) in Kombination mit den Verfahrensschritten der ersten oder zweiten Alternativen des Verfahrens bei Wälzlagern in Form von Pendelrollenlagern.

Der Stahlwerkstoff der wenigstens einen Wälzlagerkomponente weist bei einer mikroskopischen Prüfung von Edelstählen auf nichtmetallische Einschlüsse nach DIN 50602 (Ausgabe 1998), insbesondere im Mittel oder gemittelt, erfindungsgemäß weniger als 100 nichtmetallische Einschlüsse pro 1000 mm² (Quadratmillimeter) Schlifffläche beziehungsweise weniger als 0,1 nichtmetallische Einschlüsse pro 1 mm² (Quadratmillimeter) Schlifffläche auf. Somit weist der Stahlwerkstoff der wenigstens einen Wälzlagerkomponente eine hohe Reinheit beziehungsweise einen hohen Reinheitsgrad auf, beispielsweise im Vergleich zu den Referenzwerten der DIN EN ISO 683-17 (Ausgabe 2015).

Die geringe Anzahl an nichtmetallischen Einschlüssen für den Stahlwerkstoff der wenigstens einen Wälzlagerkomponente in Kombination mit dem korrespondierenden Stahlwerkstoff der wenigstens einen Wälzlagerkomponente und ferner in Kombination mit den Verfahrensschritten der ersten oder zweiten Alternative des Verfahrens bewirken eine Steigerung der Zähigkeit der wenigstens einen Wälzlagerkomponente. Die Erhöhung der Zähigkeit führt zu einer höheren Grübchentragfähigkeit beziehungsweise zu einer höheren Wälzfestigkeit und somit zu einer Erhöhung der Lebensdauer der wenigstens einen Wälzlagerkomponente, beispielsweise für die Verwendung des Stahlwerkstoffs der wenigstens einen Wälzlagerkomponente in Kombination mit den Verfahrensschritten der ersten oder zweiten Alternativen des Verfahrens bei Wälzlagern, insbesondere Pendelrollenlagern.

Bevorzugt weist der Stahlwerkstoff der wenigstens einen Wälzlagerkomponente keine Typ-4-Einschlüsse beziehungsweise keine Einschlüsse mit der Größenkennziffer 4 oder größer von Oxiden (OA ("aufgelöste Zeilen"), OS ("strichförmige Zeilen"), OG ("globulare Einschlüsse")) und/oder von Sulfiden (SS ("strichförmige Zeilen")) auf. Dabei spielt es keine Rolle, ob es sich um dünne und dickere Einschlusszeilen sowie Mehrfachzeilen betreffend die Einschlusstypen OA und OS handelt, wie in der DIN 50602 (Ausgabe 1998), behandelt. Somit weist der Stahlwerkstoff der wenigstens einen Wälzlagerkomponente eine hohe Reinheit beziehungsweise einen hohen Reinheitsgrad auf, beispielsweise im Vergleich zu den Referenzwerten der DIN EN ISO 683-17 (Ausgabe 2015).

Die Vermeidung von oben genannten Typ-4-Einschlüssen bzw. Einschlüssen mit der Größenkennziffer 4 oder größer nach DIN 50602 (Ausgabe 1998), ist ebenfalls eine Angabe der Reinheit beziehungsweise des Reinheitsgrades. Dabei gilt, je höher der Reinheitsgrad beziehungsweise die Reinheit im Zusammenhang für den Stahlwerkstoff der wenigstens einen Wälzlagerkomponente in Kombination mit dem korrespondierenden Stahlwerkstoff der wenigstens einen Wälzlagerkomponente und ferner in Kombination mit den Verfahrensschritten der ersten oder zweiten Alternative des Verfahrens, desto höher die Zähigkeit der wenigstens einen Wälzlagerkomponente. Die Erhöhung der Zähigkeit führt zu einer höheren Grübchentragfähigkeit beziehungsweise zu einer höheren Wälzfestigkeit und somit zu einer Erhöhung der Lebensdauer der wenigstens einen Wälzlagerkomponente, beispielsweise für die Verwendung des Stahlwerkstoffs der wenigstens einen Wälzlagerkomponente in Kombination mit den Verfahrensschritten der ersten oder zweiten Alternativen des Verfahrens bei Wälzlagernin Form von Pendelrollenlagern.

Insbesondere weist der Stahlwerkstoff der wenigstens einen Wälzlagerkomponente bei der mikroskopischen Prüfung von Edelstählen auf nichtmetallische Einschlüsse nach DIN 50602 (Ausgabe 1998), hinsichtlich Typ-1-Einschlüssen von Sulfiden (SS) beziehungsweise hinsichtlich Einschlüssen von Sulfiden (SS) der Größenkennziffer 1 oder kleiner einen Summenkennwert, insbesondere im Mittel oder gemittelt, von höchstens 100 pro 1000 mm² (Quadratmillimeter) Schlifffläche beziehungsweise von höchstens 0,1 nichtmetallische Einschlüssen pro 1 mm² (Quadratmillimeter) Schlifffläche auf. Somit weist der Stahlwerkstoff der wenigstens einen Wälzlagerkomponente eine hohe Reinheit beziehungsweise einen hohen Reinheitsgrad auf, beispielsweise im Vergleich zu den Referenzwerten der DIN EN ISO 683-17 (Ausgabe 2015).

Bevorzugt weist der Stahlwerkstoff der wenigstens einen Wälzlagerkomponente bei der mikroskopischen Prüfung von Edelstählen auf nichtmetallische Einschlüsse nach DIN 50602 (Ausgabe 1998), hinsichtlich Typ-1-Einschlüssen von Oxiden (OA ("aufgelöste Zeilen"), OS ("strichförmige Zeilen"), OG ("globulare Einschlüsse")) beziehungsweise hinsichtlich Einschlüssen von Oxiden (OA ("aufgelöste Zeilen"), OS ("strichförmige Zeilen"), OG ("globulare Einschlüsse")) der Größenkennziffer 1 oder kleiner einen Summenkennwert, insbesondere im Mittel oder gemittelt, von höchstens 10 pro 1000 mm² (Quadratmillimeter) Schlifffläche beziehungsweise von höchstens 0,01 nichtmetallische Einschlüssen pro 1 mm² (Quadratmillimeter) Schlifffläche auf. Somit weist der Stahlwerkstoff der wenigstens einen Wälzlagerkomponente eine hohe Reinheit beziehungsweise einen hohen Reinheitsgrad auf, beispielsweise im Vergleich zu den Referenzwerten der DIN EN ISO 683-17 (Ausgabe 2015).

Betreffend die oben genannten geringen Zahlen an nichtmetallischen Einschlüssen für den Stahlwerkstoff der wenigstens einen Wälzlagerkomponente in Kombination mit dem korrespondierenden Stahlwerkstoff der wenigstens einen Wälzlagerkomponente und ferner in Kombination mit den Verfahrensschritten der ersten oder zweiten Alternative des Verfahrens wird eine Steigerung der Zähigkeit der wenigstens einen Wälzlagerkomponente bewirkt. Die Erhöhung der Zähigkeit führt - wie bereits mehrfach geschildert - zu einer höheren Grübchentragfähigkeit beziehungsweise zu einer höheren Wälzfestigkeit und somit zu einer Erhöhung der Lebensdauer der wenigstens einen Wälzlagerkomponente, beispielsweise für die Verwendung des Stahlwerkstoffs der wenigstens einen Wälzlagerkomponente in Kombination mit den Verfahrensschritten der ersten oder zweiten Alternativen des Verfahrens bei Wälzlagern, insbesondere Pendelrollenlagern.

Des Weiteren kann der Stahlwerkstoff der wenigstens einen Wälzlagerkomponente durch ein Schmelzverfahren oder durch Umschmelzen oder durch Erschmelzen gewonnen werden.

Das Erschmelzen oder Umschmelzen oder das Schmelzverfahren kann eine konventionelle Lufterschmelzung, Vakuumbehandlung in der Sekundärmetallurgie und/oder eine Vakuumerschmelzung umfassen, sodass ein Stahl mit hohem Reinheitsgrad oder hoher Reinheit erzeugbar ist.

Zusätzlich oder alternativ kann der Stahlwerkstoff der wenigstens einen Wälzlagerkomponente durch ein Umschmelzverfahren unter Schutzgas oder unter Vakuum gewonnen werden, sodass ein Stahl mit hohem Reinheitsgrad oder hoher Reinheit erzeugbar ist.

Die wenigstens eine Wälzlagerkomponente kann ein Wälzkörper oder ein Wälzlagerring sein, insbesondere in Form eines Innen- und/oder eines Außenlagerrings.

Auch kann die wenigstens eine Wälzlagerkomponente zumindest ein Teil eines Kugellagers und/oder eines Rollenlagers und/oder eines Pendelrollenlagers und/oder eines Getriebelagers und/oder eines Getriebelagers und/oder eines Radsatzlagers für Bahnanwendungen und/oder eines Bolzens für Schlepphebelanwendungen, auf dem Wälzkörper abrollen, sein. Eingesetzt kann die wenigstens eine Wälzlagerkomponente nach dem vorgestellten Verfahren allgemein in der Industrie und/oder im Automobil-Bereich werden.

Zudem kann die wenigstens eine Wälzlagerkomponente ein stehendes Bauteil oder Gehäuseteil oder ein drehendes Bauteil oder eine Welle sein, auf denen Wälzkörper abrollen.

Ein zweiter Aspekt der vorliegenden Erfindung umfasst eine Verwendung des Verfahrens zur Herstellung von hochzähen Wälzlagerkomponenten, und zwar eine Verwendung zur Herstellung von Wälzkörpern und/oder Wälzlagerringen. Weiterhin ist eine Verwendung des Verfahrens zur Herstellung von Wellen, Bolzen oder Gehäuseteilen, auf denen Wälzkörper abrollen, für die Herstellung von Getriebelagern und/oder für die Herstellung von Radsatzlagern für Bahnanwendungen und/oder von Bolzen für Schlepphebelanwendungen.

Es wird ausdrücklich darauf hingewiesen, dass die Merkmale des Verfahrens zur Herstellung von hochzähen Wälzlagerkomponenten, einzeln oder miteinander kombinierbar Anwendung finden können.

Anders ausgedrückt, die Merkmale betreffend das Verfahren können auch hier mit weiteren Merkmalen kombiniert werden.

Das Verfahren zur Herstellung von hochzähen Wälzlagerkomponenten kann für die Herstellung von Wälzkörpern und/oder Wälzlagerringen, insbesondere Innen- und/oder Außenlagerringe, und/oder für die Herstellung von Wellen oder Gehäuseteilen, auf denen Wälzkörper abrollen, und/oder für die Herstellung von Getriebelagern und/oder für die Herstellung von Radsatzlagern für Bahnanwendungen und/oder für die Herstellung von Bolzen für Schlepphebelanwendungen, auf denen Wälzkörper abrollen, verwendet werden.

Dabei können die Wälzlagerkomponenten Komponenten eines Kugellagers, eines Rollenlagers und/oder eines Pendelrollenlagers sein.

Es wird ausdrücklich darauf hingewiesen, dass die Merkmale des Verfahrens zur Herstellung von hochzähen Wälzlagerkomponenten, einzeln oder miteinander kombinierbar Anwendung finden können.

Anders ausgedrückt, die Merkmale betreffend das Verfahren zur Herstellung von hochzähen Wälzlagerkomponenten können auch hier mit weiteren Merkmalen kombiniert werden.

So wird eine erfindungsgemäße Wälzlagerkomponente eines Wälzlagers hergestellt durch das erfindungsgemäße Verfahren.

Bei einer Wälzlagerkomponente kann es sich um Wälzkörper und/oder Wälzlagerringe, insbesondere Innen- und/oder Außenlagerringe, handeln.

Konkret kann die Wälzlagerkomponente ein Teil eines Kugellagers und/oder eines Rollenlagers und/oder eines Pendelrollenlagers sein.

Nachfolgend wird der oben dargestellte Erfindungsgedanke nochmals und ergänzend mit anderen Worten ausgedrückt.

Dieser Gedanke betrifft - vereinfacht dargestellt - die Erhöhung von Tragfähigkeit, Standzeiten beziehungsweise Lebensdauern von Wälzlagern als notwendige Weiterentwicklung im Hinblick auf eine verbesserte Nachhaltigkeit von solchen Maschinenelementen.

Um höheren Anforderungen im Hinblick auf die Toleranz eines Wälzlagers beim Einsatz in verschmutzten Umgebungsbedingungen zu erfüllen, werden erhöhte Restaustenitgehalte als hilfreich angesehen. Des Weiteren wird eine thermomechanisch stabile Mikrostruktur als notwendige Bedingung für Wälzfestigkeit angesehen, da ein betriebsbedingter Restaustenitabbau als Teil des Wälzermüdungsprozesses angesehen werden kann.

Darüber hinaus kann für höchste Standzeiten von Wälzlagern ein besonders guter mikroskopischer und makroskopischer Reinheitsgrad notwendig sein, da dies die Basis der Wälzfestigkeit darstellt. Hierbei kann speziell im Hinblick auf Pendelrollenlager bemerkt werden, dass alle Faktoren gleichzeitig auftreten können, da erhöhte Schlupfanteile im Betrieb zu einer erhöhten Temperatur im Kontakt führen können und die randnahe Beanspruchung eine ausgeprägte Sensitivität gegenüber oberflächennahen Einschlüssen zur Folge haben kann.

Eine Leistungssteigerung einer Wälzlagerkomponente, wie der eines Pendelrollenlager, kann durch eine Wärmebehandlung erzielt werden, wenn als Basis eine hinreichend gute Stahlreinheit vorliegt, die nicht für einen verfrühten einschlussbedingten Ausfall sorgt.

Im Grunde genommen kann der erfinderische Gedanke in einer Kombination einer Wärmebehandlung und eines außergewöhnlich hohen mikroskopischen Reinheitsgrads in einem laufbahnnahen Bereich auf dem Niveau von umgeschmolzenen Stahlgüten und in einer Kombination für bestimmte Zusammensetzungen eines Stahlwerkstoffs angesehen werden.

Dazu kann eine konventionelle Lufterschmelzung in Verbindung mit hohen Umformgraden und einer neuartigen Wärmebehandlung dienen, die in dieser Art bisher nicht im Bereich der Wälzlager Anwendung findet.

Für ein Verfahren zur Herstellung von hochzähen Wälzlagerkomponenten hat sich ein Stahlwerkstoff nachfolgender Zusammensetzung bewährt:
- 0,7 - 1,05 Gew.-% Kohlenstoff,
- 0,50 - 0,9 Gew.-% Silizium,
- 0,9 - 1,3 Gew.% Mangan,
- 1,3 - 1,75 Gew.-% Chrom,
- max. 0,35 Gew.-% Nickel,
- max. 0,15 Gew.-% Molybdän,
- max. 0,1 Gew.-% Vanadium,
- max. 0,060 Gew.-% Aluminium,
- max. 0,08 Gew.-% Schwefel,
- max. 0,025 Gew.-% Phosphor,
- max. 0,003 Gew.-% Titan,
- max. 0,015 Gew.-% Stickstoff,
- max. 0,007 Gew.-% Sauerstoff,
- max. 0,0035 Gew.-% Kalzium,
- max. 0,30 Gew.-% Kupfer, und
- Rest Eisen sowie nicht vermeidbare Spurenelemente bzw. Verunreinigungen, wie Antimon (Sb), Zinn (Sn), Arsen (As) und dergleichen.

Dabei kann die Summe aus Mangan, Chrom und Silizium größer 2,95 Gew.-%, insbesondere mehr als 3,05 Gew.-% betragen.

Der Stahlwerkstoff kann darüber hinaus eine mikroskopische Reinheit mit einer mittleren Einschlussdichte von 0,1 Einschlüsse / mm² (Quadratmillimeter) Schlifffläche bezogen auf 1-wertige Sulfide und 0,01 Einschlüsse / mm² (Quadratmillimeter) Schlifffläche bezogen auf 1-wertige Oxide aufweisen. In jedem Fall sollen 4-wertige Einschlüsse (Oxide und Sulfide) vermieden werden (vergleiche DIN 50602 (Ausgabe 1998)).

Darüber hinaus kann für höchste Wälzfestigkeiten beziehungsweise für höchste Stribecksche Wälzpressung beziehungsweise für höchste Grübchentragfähigkeit ein besonders hoher Reinheitsgrad durch konventionelle Lufterschmelzung, Vakuumbehandlung in der Sekundärmetallurgie oder Vakuumerschmelzung und/oder Umschmelzverfahren unter Schutzgas oder Vakuum erzeugt werden. Die Gefügestabilisierung des Stahlwerkstoffs kann durch die Verwendung einer angepassten Austenitisierung in Verbindung mit einer gezielten Wärmebehandlung plus einer nachfolgenden Bainitisierung oder martensitischen Härtung erzeugt werden.

Eine niedrige Austenitisierungstemperatur, bevorzugt in einem Tempertaturbereich von 835 °C bis 870 °C, bevorzugt in einem Temperaturbereich von 845 °C bis 860 °C, kann einen reduzierten Kohlenstoffgehalt in der Matrix deutlich unterhalb des nominell 1 Gew.-% Kohlenstoff, insbesondere beim Stahlwerkstoff 100CrMnSi6-4, zur Folge haben. Dies wirkt sich positiv auf die Grundzähigkeit der Matrix aus. Selbstverständlich sind auch andere Stahlwerkstoffe bzw. Stahllegierungen, wie oben beschrieben, verwendbar.

Eine Umverteilung des Kohlenstoffs im Zuge der Wärmebehandlung kann den resultierenden Kohlenstoff in der Martensit- bzw. Bainitmatrix weiterhin absenken, wodurch die Zähigkeit wiederum gesteigert werden kann.

In der Haltestufe gemäß Alternative 1 im Bereich von 170 °C bis 220 °C wird Kohlenstoff aus dem neu gebildeten Martensit ausgeschieden und der Kohlenstoff wandert teilweise in den noch vorliegenden Restaustenit. Dieser wird hierdurch weiter gegen eine Umwandlung stabilisiert, da die Übersättigung ansteigt und damit die Martensitstarttemperatur dieses Restaustenits deutlich absinkt. Der Kohlenstoff aus den ersten gebildeten Martensitnadeln wandert in den noch vorliegenden Restaustenit. Eine Reduktion des Kohlenstoffs kann einen positiven Effekt auf die Zähigkeit des Martensits zur Folge haben.

Eine weitere Reduktion des Matrixkohlenstoffs kann nicht vor dem Abschreckvorgang, insbesondere durch eine gezielte Unteraustenitisierung des Materials, erzielt werden, da sonst keine ausreichende Durchhärtung der Werkstücke erzielt werden kann.

In der martensitischen Ausführung, also der ersten Alternative der vorliegenden Erfindung, zeichnet sich das Werkstück durch eine martensitische Matrix, eventuell mit Anteilen an Bainit, und einen Restaustenit-Gehalt von 15 Vol.-% bis 25 Vol.-% aus. Durch die thermische Stabilisierung des Bauteils mithilfe der Wärmebehandlung kann dieser Restaustenit außergewöhnlich stabil ausgebildet werden und selbst bei erhöhten Anwendungstemperaturen im Bereich von 150 °C bis 180 °C oder bei erhöhten Flächenpressungen nicht mehr - oder nur in geringem Maße - umwandeln. Dieser stabile Restaustenit verleiht dem Bauteil eine erhöhte Zähigkeit in Verbindung mit dem reduzierten Kohlenstoffgehalt in der Martensitmatrix.

In der bainitischen Ausführung, also der zweiten Alternative der vorliegenden Erfindung, kann sich die Wälzlagerkomponente durch eine bainitische Matrix, insbesondere umfassend Karbide, und einen verbleibenden Restaustenit gemäß dem gewünschten Umwandlungsgrad auszeichnen. Dieser liegt im Bereich von 2 Vol.-% bis 18 Vol.-%.

Speziell von Vorteil sind die damit erzielten Werkstoffeigenschaften für die Anwendung in Wälzlagern, die beispielsweise bei Pendelrollenlagern prinzipbedingt sowohl höhere Schlupfanteile, das heißt kein sauberes Abrollen der Kontaktpartner, aufweisen, als auch durch die vorliegenden Betriebsbedingungen oftmals Mischreibungszustände erfahren.

Durch letztere kann in der Kontaktfläche höhere Reibung entstehen, wodurch höhere Tangentialspannungen resultieren, die die Materialbelastung an der Wälzlagerkomponenten-Oberfläche ansteigen lassen. Zusätzlich kann die prinzipbedingte Schlupfbelastung noch weiter die Gefahr von oberflächeninduzierten Schäden erhöhen. Durch den Einsatz des erfindungsgemäßen Verfahrens zur Herstellung von hochzähen Wälzlagerkomponenten kann die Werkstoffbelastbarkeit signifikant gesteigert werden und die Lebensdauer einer Wälzlagerkomponente deutlich gegenüber dem Stand der Technik verbessert werden, da die gesteigerte Zähigkeit einer Schadensentstehung an der Wälzlagerkomponente entgegenwirkt.

Durch die Reduktion der Anzahl an nichtmetallischen Einschlüssen kann weiterhin das Schadensrisiko, bedingt durch die Wirkung dieser als Schadensausgangspunkt, reduziert werden. Generell können zähigkeitsoptimierte Werkstoffeigenschaften hilfreich für die Toleranz gegen oberflächeninduzierte Schäden sein. Dies gilt auch im Fall von Verschmutzung von Wälzlagern, da die gesteigerte Zähigkeit sowohl über den Restaustenit als auch durch die kohlenstoffreduzierte Martensit- bzw. Bainitmatrix wirksam die notwendige Anpassungsverformung im Kontaktspalt bei der Überrollung von Fremdmaterial ermöglicht, ohne dass es zu zügiger Rissentstehung führt.

Nachstehend wird die Erfindung anhand eines Ausführungsbeispiels näher erläutert.

Ein Verfahren zur Herstellung von hochzähen Wälzlagerkomponenten umfasst als ersten Schritt das Bereitstellen einer Wälzlagerkomponente aus einem geeigneten Stahlwerkstoff, welcher in einem nächsten Schritt austenitisiert wird.

Das Austenitisieren beziehungsweise die Austenitisierung erfolgt in einem Temperaturbereich, so dass Austenit und Karbide nebeneinander vorliegen. Das Austenitisieren wird dabei oberhalb der Austenitisierungstemperatur Ac1 des Stahlwerkstoffs der Wälzlagerkomponente durchgeführt. Dies findet insbesondere in einem Tempertaturbereich von 845 °C bis 860 °C statt.

Danach wird gezielt die Wälzlagerkomponente abgeschreckt, sodass nicht umgewandelter Restaustenit erhalten bleibt. Dabei wird auf eine Temperatur von 10 bis 20 K unterhalb der Martensitstarttemperatur des verwendeten Stahlwerkstoffs gekühlt.

Konkret wird die Wälzlagerkomponente hier in ein Salzwarmbad umgelagert, das eine Temperatur im Bereich von 190 °C bis 210 °C hat. Die Wälzlagerkomponente verbleibt im Warmbad für 14 bis zu 25 Minuten.

Nachstehend wird nun im Anschluss an das Abschrecken die erste Alternative zur Herstellung von hochzähen Wälzlagerkomponenten geschildert.

So schließt sich bei der ersten Alternative nach dem Abschrecken ein Schritt des Abkühlens der Wälzlagerkomponente auf Raumtemperatur an.

Nach dem Abkühlen folgt der Schritt des Anlassens der Wälzlagerkomponente, um ein Werkstoffgefüge mit einer martensitischen Matrix (eventuell mit Anteilen an Bainit) mit einem bestimmten Restaustenit-Gehalt zu erhalten. Dabei wird das Anlassen unterhalb der Austenitisierungstemperatur Ac1 des Stahlwerkstoffs der Wälzlagerkomponente bei einer Temperatur im Bereich von 220 bis 240 °C über einen Zeitraum im Bereich von 1 bis 4 h durchgeführt.

Der erhaltene Restaustenit-Gehalt liegt im Bereich von 15 Vol.-% und 25 Vol.-%.

Die Anlassdauer ist abhängig von der Wälzlagerkomponenten- und Chargengröße sowie von dem Chargenaufbau, wenn mehrere Wälzlagerkomponenten gleichzeitig behandelt werden.

Anschließend beziehungsweise abschließend wird die Wälzlagerkomponente auf Raumtemperatur abgekühlt.

Nachstehend wird die zweite Alternative zur Herstellung von hochzähen Wälzlagerkomponenten geschildert, die sich ebenso wie die erste Alternative an das oben beschriebene Abschrecken anschließt.

So wird nach dem Abschrecken in der zweiten Alternative in einem weiteren Schritt die Wälzlagerkomponente auf eine Temperatur oberhalb der Martensitstart-Temperatur des verwendeten Stahlwerkstoffs erwärmt. Dazu wird die Wälzlagerkomponente in ein Salzwarmbad umgesetzt, um ein Werkstoffgefüge mit einer bainitischen Matrix (mit Karbiden) und mit einem bestimmten Restaustenit-Gehalt zu erhalten.

Das Erwärmen wird so durchgeführt, dass der bestimmte Restaustenit-Gehalt im Bereich von 2 Vol.-% bis 18 Vol.-% liegt.

Um dies zu erreichen, weist das Salzwarmbad eine Temperatur im Bereich von 220 °C bis 240 °C auf. Ferner wird die Wälzlagerkomponente über eine Haltedauer im Bereich von 6 bis 24 Stunden innerhalb des Salzwarmbads belassen, um den bestimmten Restaustenit-Gehalt zu erhalten. Dabei ist die Haltedauer abhängig von der Wälzlagerkomponenten- und Chargengröße sowie von dem Chargenaufbau, wenn mehrere Wälzlagerkomponenten gleichzeitig behandelt werden.

Nach der Haltedauer im Warmbad wird die Wälzlagerkomponente in einen Niedertemperaturofen mit ansteigender oder erhöhter Temperatur im Vergleich zum Salzwarmbad mit einer Temperatur im Bereich von 220 °C bis 280 °C umgesetzt und über einen Zeitraum von 0,5 bis 10 h gehalten, bis der bestimmte Restaustenit-Gehalt erreicht ist.

Anschließend beziehungsweise abschließend wird die Wälzlagerkomponente auf Raumtemperatur abgekühlt.

Alle nachfolgenden Ausführungen treffen auf die erste Alternative und zweite Alternative der vorliegenden Erfindung zu.

Der Stahlwerkstoff der Wälzlagerkomponente umfasst bevorzugt 0,7 - 1,05 Gew.-% Kohlenstoff sowie eine Mischung an Legierungselementen von mehr als 3,05 Gew.-%, wobei die Mischung an Legierungselementen Mangan, Chrom und Silizium aufweist.

Insbesondere hat der Stahlwerkstoff der Wälzlagerkomponente folgende Bestandteile:
- 0,7 - 1,05 Gew.-% Kohlenstoff,
- 0,50 - 0,90 Gew.-% Silizium,
- 0,90 - 1,30 Gew.-% Mangan,
- 1,3 - 1,75 Gew.-% Chrom, und
- Rest Eisen sowie nicht vermeidbare Spurenelemente beziehungsweise Verunreinigungen (wie Sb, Sn, As und dergleichen).

Bevorzugt umfasst der Stahlwerkstoff der Wälzlagerkomponente folgende Bestandteile:
- max. 0,35 Gew.-% Nickel,
- max. 0,10 Gew.-% Vanadium,
- max. 0,060 Gew.-% Aluminium,
- max. 0,08 Gew.-% Schwefel,
- max. 0,025 Gew.-% Phosphor,
- max. 0,003 Gew.-% Titan,
- max. 0,015 Gew.-% Stickstoff,
- max. 0,007 Gew.-% Sauerstoff,
- max. 0,0035 Gew.-% Kalzium,
- max. 0,30 Gew.-% Kupfer.

Das Höchstmaß der vorgenannten Elemente innerhalb der Zusammensetzung des Stahlwerkstoffs der Wälzlagerkomponente beeinflusst wenig bis gar nicht in einem so geringen Maße die Materialeigenschaften, dass diese Bestandteile einzeln oder in Summe innerhalb der vorgenannten Grenzen beziehungsweise in der vorgenannten Konzentration hinnehmbar sind.

Konkreter geschildert, weist der Stahlwerkstoff der Wälzlagerkomponente eine Wälzlagerstahl-Legierung auf, die aus der DIN EN ISO 683-17 (Ausgabe 2015) (früher DIN 17230 (Ausgabe 1980)) gewählt ist.

Dabei handelt es sich insbesondere um die Wälzlagerstahl-Legierung mit der Bezeichnung 100CrMnSi6-4 oder mit der Werkstoffbezeichnung 1.3520.

Ferner hat die Wälzlagerstahl-Legierung nach DIN EN ISO 683-17 (Ausgabe 2015) bei einer mikroskopischen Prüfung von Edelstählen auf nichtmetallische Einschlüsse weniger Einschlüsse als in der DIN EN ISO 683-17 (Ausgabe 2015) gefordert.

Anders ausgedrückt, hat der Stahlwerkstoff der Wälzlagerkomponente bei einer mikroskopischen Prüfung von Edelstählen auf nichtmetallische Einschlüsse nach DIN 50602 (Ausgabe 1998), im Mittel oder gemittelt weniger als 100 nichtmetallische Einschlüsse pro 1000 mm² (Quadratmillimeter) Schlifffläche.

Zudem hat der Stahlwerkstoff der Wälzlagerkomponente keine Typ-4-Einschlüsse von Oxiden (OA, OS, OG) und von Sulfiden (SS).

Konkreter beschrieben, hat der Stahlwerkstoff der Wälzlagerkomponente bei der mikroskopischen Prüfung von Edelstählen auf nichtmetallische Einschlüsse nach DIN 50602 (Ausgabe 1998), hinsichtlich Typ-1-Einschlüssen von Sulfiden (SS) einen Summenkennwert im Mittel oder gemittelt von höchstens 100 pro 1000 mm² (Quadratmillimeter) Schlifffläche.

Ferner hat der Stahlwerkstoff der Wälzlagerkomponente bei der mikroskopischen Prüfung von Edelstählen auf nichtmetallische Einschlüsse nach DIN 50602 (Ausgabe 1998), hinsichtlich Typ-1-Einschlüssen von Oxiden (OA, OS, OG) einen Summenkennwert im Mittel oder gemittelt von höchstens 10 pro 1000 mm² (Quadratmillimeter) Schlifffläche.

Um diese geringe Anzahl von Einschlüssen zu erhalten und um einen erhöhten Reinheitsgrad oder eine erhöhte Reinheit zu erhalten, wird der Stahlwerkstoff der Wälzlagerkomponente durch ein Schmelzverfahren oder durch Umschmelzen oder durch Erschmelzen gewonnen.

Das Erschmelzen oder Umschmelzen oder das Schmelzverfahren erfolgt mithilfe einer Vakuumerschmelzung, sodass ein Stahl mit hohem Reinheitsgrad oder hoher Reinheit erzeugbar ist. Alternativ ist es auch möglich, dass der Stahlwerkstoff der Wälzlagerkomponente durch ein Umschmelzverfahren unter Schutzgas oder unter Vakuum gewonnen wird.

Grundsätzlich bleibt festzuhalten, dass die Wälzlagerkomponente bevorzugt ein Wälzkörper und/oder ein Wälzlagerring, insbesondere ein Innen- und/oder ein Außenlagerring, ist. Dabei ist die Wälzlagerkomponente insbesondere eine Komponente eines Pendelrollenlagers.

Es kann aber auch sein, dass die Wälzlagerkomponente zumindest ein Teil eines Getriebelagers oder eines Radsatzlagers für Bahnanwendungen und/oder ein Bolzen für eine Schlepphebelanwendungen ist.

Mit anderen Worten ausgedrückt, findet das vorgestellte Verfahren zur Herstellung von hochzähen Wälzlagerkomponenten Verwendung für die Herstellung von Wälzkörpern und/oder Wälzlagerringen. Auch ist die Verwendung des vorgestellten Verfahrens für die Herstellung von Wellen oder Gehäuseteilen, auf denen Wälzkörper abrollen, oder für die Herstellung von Getriebelagern oder für die Herstellung von Radsatzlagern für Bahnanwendungen oder für die Herstellung von Bolzen für Schlepphebelanwendungen möglich.

Grundsätzlich ist festzuhalten, dass die beispielhaft ausgewählte vorgenannte Wälzlagerstahl-Legierung mit der Bezeichnung 100CrMnSi6-4 oder mit der Werkstoffbezeichnung 1.3520 nach DIN EN ISO 683-17 (Ausgabe 2015) in Kombination mit einer erhöhten Reinheit oder einem erhöhten Reinheitsgrad und in Kombination mit den Verfahrensschritten der ersten oder zweiten Alternative der vorliegenden Erfindung eine Steigerung der Zähigkeit der Wälzlagerlkomponente bewirken. Die Erhöhung der Zähigkeit führt zu einer höheren Grübchentragfähigkeit beziehungsweise zu einer höheren Wälzfestigkeit und somit zu einer Erhöhung der Lebensdauer der Wälzlagerkomponenten, beispielsweise für die Verwendung der vorgenannten Wälzlagerstahl-Legierung in Kombination mit den Verfahrensschritten der ersten oder zweiten Alternativen des Verfahrens bei Wälzlagern, wie Pendelrollenlagern.

## Patentansprüche

1. Verfahren zur Herstellung von hochzähen Wälzlagerkomponenten aufweisend die Schritte:
- Bereitstellen wenigstens einer Wälzlagerkomponente aus einem Stahlwerkstoff, wobei der Stahlwerkstoff einen Reinheitsgrad aufweist derart, dass bei einer mikroskopischen Prüfung von Edelstählen auf nichtmetallische Einschlüsse nach DIN 50602 (Ausgabe 1998) im Mittel weniger als 100 nichtmetallische Einschlüsse pro 1000 mm² Schlifffläche auftreten, und wobei der Stahlwerkstoff 0,70 - 1,1 Gew.-% Kohlenstoff sowie eine Mischung an Legierungselementen von mehr als 1,75 Gew.-% und weniger als 3,4 Gew.-% umfasst, wobei die Mischung an Legierungselementen Mangan, Chrom und Silizium umfasst,
- Austenitisieren der wenigstens einen Wälzlagerkomponente in einem Temperaturbereich derart, dass im Gefüge des Stahlwerkstoffs Austenit und Karbide nebeneinander vorliegen,
- Abschrecken der wenigstens einen Wälzlagerkomponente auf eine Temperatur, die 10 bis 20 K unterhalb einer Martensitstart-Temperatur des Stahlwerkstoffs liegt, indem die Wälzlagerkomponente in ein Warmbad mit einer Temperatur im Bereich von 170 bis 220 °C umgelagert wird und dort 14 bis 25 min gehalten wird, wodurch Martensit gebildet und nicht umgewandelter Restaustenit erhalten bleibt, und wobei Kohlenstoff aus dem gebildeten Martensit in den nicht umgewandelten Restaustenit wandert,
- Abkühlen der wenigstens einen Wälzlagerkomponente auf Raumtemperatur nach dem Abschrecken,
- Anlassen der wenigstens einen Wälzlagerkomponente nach dem Abkühlen, indem die Wälzlagerkomponente auf eine Temperatur im Bereich von 220 bis 245°C erwärmt und auf dieser über einen Zeitraum von 1 bis 4 h gehalten wird, wobei als Werkstoffgefüge eine martensitische Matrix mit einem Restaustenit-Gehalt im Bereich von 15 Vol.-% und 25 Vol.-% erhalten wird, und
- anschließendes Abkühlen der Wälzlagerkomponente auf Raumtemperatur unter Ausbildung der hochzähen Wälzlagerkomponente.

2. Verfahren zur Herstellung von hochzähen Wälzlagerkomponenten aufweisend die Schritte:
- Bereitstellen wenigstens einer Wälzlagerkomponente aus einem Stahlwerkstoff, wobei der Stahlwerkstoff einen Reinheitsgrad aufweist derart, dass bei einer mikroskopischen Prüfung von Edelstählen auf nichtmetallische Einschlüsse nach DIN 50602 (Ausgabe 1998) im Mittel weniger als 100 nichtmetallische Einschlüsse pro 1000 mm² Schlifffläche auftreten, und wobei der Stahlwerkstoff 0,70 - 1,1 Gew.-% Kohlenstoff sowie eine Mischung an Legierungselementen von mehr als 1,75 Gew.-% und weniger als 3,4 Gew.-% umfasst, wobei die Mischung an Legierungselementen Mangan, Chrom und Silizium umfasst,
- Austenitisieren der wenigstens einen Wälzlagerkomponente in einem Temperaturbereich derart, dass im Gefüge des Stahlwerkstoffs Austenit und Karbide nebeneinander vorliegen,
- Abschrecken der wenigstens einen Wälzlagerkomponente auf eine Temperatur, die 10 bis 20 K unter einer Martensitstart-Temperatur des Stahlwerkstoffs liegt, indem die Wälzlagerkomponente in ein Warmbad mit einer Temperatur im Bereich von 170 bis 220 °C umgelagert wird und dort 14 bis 25 min gehalten wird, wodurch Martensit gebildet und nicht umgewandelter Restaustenit erhalten bleibt,
- Erwärmen der wenigstens einen Wälzlagerkomponente nach dem Abschrecken auf eine Temperatur oberhalb der Martensitstart-Temperatur des verwendeten Stahlwerkstoffs, indem die Wälzlagerkomponente in ein Warmbad mit einer Temperatur im Bereich von 220 bis 240 °C umgelagert wird und dort über einen Zeitraum im Bereich von 3 bis 24 Stunden gehalten wird,
Umlagern der wenigstens einen Wälzlagerkomponente über eine Haltedauer im Bereich von 0,5 bis 10 Stunden in einen Niedertemperaturofen oder ein weiteres Warmbad, in welchem eine gegenüber dem Warmbad ansteigende oder erhöhte Temperatur, insbesondere im Bereich von 220 bis 280°C, vorliegt, wobei Bainit gebildet wird und nicht umgewandelter Restaustenit erhalten bleibt, und wobei Kohlenstoff aus dem gebildeten Bainit in den nicht umgewandelten Restaustenit wandert, wobei als Werkstoffgefüge eine bainitische Matrix mit einem Restaustenit-Gehalt im Bereich von 2 Vol.-% und 18 Vol.-% erhalten wird, und
- anschließendes Abkühlen der Wälzlagerkomponente auf Raumtemperatur unter Ausbildung der hochzähen Wälzlagerkomponente.

3. Verfahren nach Anspruch 2, wobei als Werkstoffgefüge eine bainitische Matrix enthaltend Karbide und mit einem Restaustenit-Gehalt im Bereich von 2 Vol.-% und 18 Vol.-% erhalten wird.

4. Verfahren nach einem der Ansprüche 1 bis 3,
wobei der Stahlwerkstoff der wenigstens einen Wälzlagerkomponente 0,7 - 1,05 Gew.-% Kohlenstoff sowie die Mischung an Legierungselementen von mehr als 2,95 Gew.-% umfasst.

5. Verfahren nach Anspruch 4,
wobei der Stahlwerkstoff die Mischung an Legierungselementen von mehr als 3,05 Gew.-% umfasst.

6. Verfahren nach einem der vorangehenden Ansprüche,
- wobei der Stahlwerkstoff der wenigstens einen Wälzlagerkomponente folgende Bestandteile umfasst:
∘ 0,7 - 1,05 Gew.-% Kohlenstoff,
∘ 0,50 - 0,90 Gew.-% oder 0,40 - 0,75 Gew.-% Silizium,
∘ 0,90 - 1,30 Gew.-% oder 0,80 - 1,70 Gew.-% Mangan,
∘ 1,3 - 1,75 Gew.-% oder 0,90 - 2,05 % Gew.-Chrom, und
o Rest Eisen sowie nicht vermeidbare Verunreinigungen,
- wobei der Stahlwerkstoff der wenigstens einen Wälzlagerkomponente optional höchstens 0,10 Gew.-% oder höchstens 0,15 Gew.-% oder zwischen 0,50 Gew.-% und 0,6 Gew.-% Molybdän aufweist.

7. Verfahren nach einem der vorangehenden Ansprüche,
- wobei der Stahlwerkstoff der wenigstens einen Wälzlagerkomponente eine Wälzlagerstahl-Legierung aufweist,
- wobei die Wälzlagerstahl-Legierung aus der DIN EN ISO 683-17 (Ausgabe 2015) gewählt ist.

8. Verfahren nach Anspruch 7,
- wobei entweder die Wälzlagerstahl-Legierung die Legierung mit der Bezeichnung 100CrMnSi4-4 oder mit der Werkstoffbezeichnung 1.3518 ist,
- oder wobei die Wälzlagerstahl-Legierung die Legierung mit der Bezeichnung 100CrMnSi6-6 oder mit der Werkstoffbezeichnung 1.3519 ist,
- oder wobei die Wälzlagerstahl-Legierung die Legierung mit der Bezeichnung 100CrMnSi6-4 oder mit der Werkstoffbezeichnung 1.3520 ist,
- oder wobei die Wälzlagerstahl-Legierung die Legierung mit der Bezeichnung 100CrMnMoSi8-4-6 oder mit der Werkstoffbezeichnung 1.3539 ist.

9. Verwendung des Verfahrens zur Herstellung von hochzähen Wälzlagerkomponenten nach einem der vorangehenden Ansprüche für die Herstellung von Wälzkörpern und/oder Wälzlagerringen, insbesondere Innen- und/oder Außenlagerringen, und/oder für die Herstellung von Wellen oder Gehäuseteilen, auf denen Wälzkörper abrollen, und/oder für die Herstellung von Getriebelagern und/oder für die Herstellung von Radsatzlagern für Bahnanwendungen und/oder für die Herstellung von Bolzen für Schlepphebelanwendungen.

10. Wälzlagerkomponente eines Wälzlagers, insbesondere eines Pendelrollenlagers, hergestellt durch ein Verfahren gemäß einem der Ansprüche 1 bis 8.
